# EUROPÄISCHE PATENTANMELDUNG

(11) **EP 4 807 317 A1**
(43) Veröffentlichungstag der Anmeldung: **16.09.2026**
(21) Anmeldenummer: 25163071.1
(22) Anmeldetag: 11.03.2025
(51) Int. Cl.: G01B 11/25

(54) **VORRICHTUNG ZUM PROJIZIEREN EINER PROJEKTIONSANORDNUNG AUF MINDESTENS EIN STÜCK EINES KÖRPERS FÜR EIN BESTIMMEN EINER DREIDIMENSIONALEN KÖRPERFORM MINDESTENS DES STÜCKS DES KÖRPERS, SYSTEM ZUM BESTIMMEN EINER DREIDIMENSIONALEN KÖRPERFORM MINDESTENS EINES STÜCKS EINES KÖRPERS UND VERFAHREN ZUM BETREIBEN DER VORRICHTUNG UND/ODER DES SYSTEMS**

(71) Anmelder: Optonic GmbH, 79106 Freiburg (DE)
(72) Erfinder: Voigt, Rainer, 79100 Freiburg (DE)
(74) Vertreter: Patentanwälte Ruff, Wilhelm, Beier, Dauster & Partner mbB

(57) **Zusammenfassung**

Die Erfindung bezieht sich auf eine Vorrichtung (1), insbesondere einen Projektor (1'), zum Projizieren einer Projektionsanordnung (2) auf mindestens ein Stück (3) eines Körpers (4) für ein Bestimmen einer dreidimensionalen Körperform (5) mindestens des Stücks (3) des Körpers (4), wobei die Vorrichtung (1) aufweist:
- eine Emissionsanordnung (6) einer Mehrzahl von identifizierbaren Laseremissionsflächen (7), welche zum Emittieren von Laserstrahlen (8) ausgebildet sind, und
- mindestens, insbesondere genau, ein diffraktives optisches Element (9), wobei das mindestens eine diffraktive optische Element (9) zum Manipulieren der emittierten Laserstrahlen (8) zum Erzeugen der Projektionsanordnung (2) ausgebildet ist derart,
- dass die Projektionsanordnung (2) eine Kachelanordnung (10) einer Mehrzahl von identifizierbaren Kacheln (11) aufweist, welche jeweils die Emissionsanordnung (6) abbilden.

## Beschreibung

### ANWENDUNGSGEBIET UND STAND DER TECHNIK

Die Erfindung bezieht sich auf eine Vorrichtung zum Projizieren einer Projektionsanordnung auf mindestens ein Stück eines Körpers für ein Bestimmen einer dreidimensionalen Körperform mindestens des Stücks des Körpers, ein System zum Bestimmen einer dreidimensionalen Körperform mindestens eines Stücks eines Körpers aufweisend die Vorrichtung und ein Verfahren zum Betreiben der Vorrichtung und/oder des Systems.

### AUFGABE UND LÖSUNG

Der Erfindung liegt als Aufgabe die Bereitstellung einer Vorrichtung zum Projizieren einer Projektionsanordnung auf mindestens ein Stück eines Körpers für ein Bestimmen einer dreidimensionalen Körperform mindestens des Stücks des Körpers, eines Systems zum Bestimmen einer dreidimensionalen Körperform mindestens eines Stücks eines Körpers aufweisend die Vorrichtung und eines Verfahrens zum Betreiben der Vorrichtung und/oder des Systems zugrunde, die verbesserte Eigenschaften aufweisen.

Die Erfindung löst diese Aufgabe durch die Bereitstellung einer Vorrichtung und eines Verfahrens beschrieben in den unabhängigen Ansprüchen. Vorteilhafte Weiterbildungen und/oder Ausgestaltungen der Erfindung sind in den abhängigen Ansprüchen beschrieben.

Die erfindungsgemäße Vorrichtung, insbesondere der erfindungsgemäße Projektor, ist zum Projizieren einer Projektionsanordnung auf mindestens, insbesondere genau, ein Stück eines Körpers für ein Bestimmen einer dreidimensionalen Körperform mindestens des Stücks des Körpers, insbesondere ausgebildet. Die Vorrichtung weist eine Emissionsanordnung einer Mehrzahl von identifizierbaren Laseremissionsflächen auf. Die Laseremissionsflächen sind zum Emittieren von Laserstrahlen ausgebildet. Des Weiteren weist die Vorrichtung mindestens, insbesondere genau, ein diffraktives optisches Element (abgekürzt: DOE) auf. Das mindestens eine diffraktive optische Element ist zum Manipulieren der emittierten Laserstrahlen zum Erzeugen der Projektionsanordnung ausgebildet derart, dass die Projektionsanordnung eine Kachelanordnung einer Mehrzahl von identifizierbaren Kacheln (Englisch: tiles) aufweist bzw. dass die Projektionsanordnung aus mindestens, insbesondere genau, der Kachelanordnung der Mehrzahl der Kacheln zusammengesetzt ist bzw. ensteht. Die Kacheln bilden jeweils die Emissionsanordnung, insbesondere der Mehrzahl der Laseremissionsflächen und/oder identifizierbar, ab bzw. weisen jeweils die Emissionsanordnung auf bzw. geben jeweils die Emissionsanordnung wieder bzw. basieren jeweils auf der Emissionsanordnung.

Die Laseremissionsflächen ermöglichen die Verwendung des mindestens einen diffraktiven optischen Elements, insbesondere im Unterschied zu mindestens einer LED, und/oder das mindestens eine diffraktive optische Element ermöglicht das Manipulieren der Laserstrahlen emittiert mittels der Laseremissionsflächen. Zusätzlich oder alternativ ermöglichen die Laseremissionsflächen, dass die Vorrichtung ohne eine, insbesondere optische, Linse, insbesondere eine Kollimatorlinse und/oder zur Strahllenkung, und/oder ohne ein Dia, insbesondere ein Glas-Dia und/oder mit einer Projektionsanordnung, und/oder ohne ein Objektiv, insbesondere zur Abbildung des Dias, und/oder ohne etwas zwischen den Laseremissionsflächen und dem mindestens einen diffraktiven optischen Element sein kann. Somit ermöglicht dies einen kleinen Abstand zwischen der Emissionsanordnung und dem mindestens einen diffraktiven optischen Element und/oder, insbesondere somit, dass die Vorrichtung klein und/oder billig bzw. kostengünstig sein kann. Weiter zusätzlich oder alternativ ermöglichen die Emissionsanordnung der Mehrzahl der identifizierbaren Laseremissionsflächen und das mindestens eine diffraktive optische Element die Projektionsanordnung aufweisend die Kachelanordnung der Mehrzahl der identifizierbaren Kacheln, welche jeweils die Emissionsanordnung abbilden. Somit ermöglicht dies das Bestimmen der dreidimensionalen Körperform mindestens des Stücks des Körpers.

Insbesondere kann die Vorrichtung elektrisch und/oder optisch sein.

Der Projektor kann ein Laserprojektor sein.

Das Projizieren, das Emittieren, das Manipulieren und/oder das Erzeugen können/kann automatisch und/oder optisch sein.

Der Begriff "Werfen" kann für den Begriff "Projizieren" synonym verwendet werden.

Der Begriffsbestandteil "feld", "verteilung" oder "muster" kann für den Begriffsbestandteil "anordnung" synonym verwendet werden.

Die Projektionsanordnung, die Emissionsanordnung und/oder die Kachelanordnung können/kann eindeutig, ohne eine Wiederholung, räumlich und/oder zweidimensional sein.

Der Körper kann dreidimensional sein.

Das Stück kann ein Oberflächenstück sein.

Der Begriff "Teil" kann für den Begriff "Stück" synonym verwendet werden.

Der Begriff "nur" kann für den Begriff "genau" synonym verwendet werden.

Der Begriff "konfiguriert", "eingerichtet" oder "vorgesehen" oder die englische Formulierung "programmed to perform the function/s of" kann für den Begriff "ausgebildet" synonym verwendet werden.

Der Begriff "umfasst" oder "hat" kann für den Begriff "aufweist" synonym verwendet werden.

Der Begriffsbestandteil "erkenn" kann für den Begriffsbestandteil "identifizier" synonym verwendet werden.

Identifizierbar kann eindeutig identifizierbar und/oder wiederidentifizierbar sein.

Die Laseremissionsflächen können Laseremissionsflächen von Halbleiterlaserquellen und/oder Laserdioden der Vorrichtung sein.

Die Laseremissionsflächen können nebeneinander, insbesondere in mindestens einer Orthogonalrichtung orthogonal zu einer Emissionsrichtung zu dem Emittieren der Laserstrahlen, insbesondere räumlich, angeordnet sein.

Die Laserstrahlen können, insbesondere nahezu ideal, genau eine Wellenlänge aufweisen und/oder Lichtstrahlen sein, insbesondere im Röntgen- oder Ultraviolett-Bereich, sichtbaren Bereich und/oder Infrarot- oder Terahertz-Bereich.

In dem mindestens einen diffraktiven optischen Element kann es durch verschiedene bzw. unterschiedliche optische Weglängen von Teilstrahlen der Laserstrahlen zu Phasenmodulationen kommen, wodurch Interferenzmuster entstehen können. In anderen Worten: Interferenz der verschieden durch das mindestens eine diffraktive optische Element phasenverschobenen, aus dem mindestens einen diffraktiven optischen Element austretenden Laserstrahlen erzeugt die Projektionsanordnung. In weiteren anderen Worten: Die Laserstrahlen werden durch das mindestens eine diffraktive optische Element geleitet und durch Strukturen mit verschiedener Dicke verschieden verzögert.

Das mindestens eine diffraktive optische Element kann als eine, insbesondere kleine, Kunststoffplatte, gepresst/geprägt und/oder zum Abbilden der Emissionsanordnung der Mehrzahl der Laseremissionsflächen in die Projektionsanordnung ausgebildet sein.

Die Formulierung "Formen und/oder Teilen bzw. Zerlegen" oder "Falten" kann für den Begriff "Manipulieren" synonym verwendet werden.

Der Begriff "Zusammensetzen" kann für den Begriff "Erzeugen" synonym verwendet werden.

Der Begriff "Replika" kann für den Begriff "Kachel" synonym verwendet werden.

Jeweils kann jeweils individuell sein.

Im Übrigen wird auf die Fachliteratur verwiesen.

In einer Weiterbildung der Erfindung sind die Laseremissionsflächen Laseremissionsflächen von Oberflächenemittern (Englisch abgekürzt: VCSEL) der Vorrichtung. Dies ermöglicht, dass die Vorrichtung besonders klein und/oder besonders billig bzw. kostengünstig und/oder leistungsstark, insbesondere aber ohne Probleme mit einer Augensicherheit, sein kann. Im Übrigen wird auf die Fachliteratur verwiesen.

Insbesondere können oder brauchen die Laseremissionsflächen nicht Streifenlaseremissionsflächen und/oder nicht diffuse Laseremissionsflächen sein.

In einer Weiterbildung der Erfindung sind die Laseremissionsflächen Punktlaseremissionsflächen, insbesondere von Punktlaserquellen der Vorrichtung. Dies ermöglicht, dass die Projektionsanordnung, die Emissionsanordnung und/oder die Kachelanordnung einfach sein können/kann. Insbesondere können/kann die Projektionsanordnung, die Emissionsanordnung und/oder die Kachelanordnung eine Punktanordnung sein. Im Übrigen wird auf die Fachliteratur verwiesen.

In einer Weiterbildung der Erfindung sind in der Emissionsanordnung, insbesondere und in den Kacheln jeweils abgebildet, die Laseremissionsflächen jeweils durch, insbesondere genau, Laseremissionsflächen in ihrer Umgebung, insbesondere durch eine einmalige, insbesondere räumliche, Anordnung der Laseremissionsflächen in der Emissionsanordnung, insbesondere und in den Kacheln jeweils abgebildet, identifizierbar. Dies ermöglicht, dass die Laseremissionsflächen gleich sein können, insbesondere die Punktlaseremissionsflächen. Insbesondere kann die Emissionsanordnung der Mehrzahl der identifizierbaren Laseremissionsflächen zufällig (Englisch: random) sein. Im Übrigen wird auf die Fachliteratur verwiesen.

In einer Weiterbildung der Erfindung sind in der Kachelanordnung die Kacheln jeweils durch die Laseremissionsflächen der Emissionsanordnung abgebildet mit mindestens, insbesondere genau, einer ausgedehnten Form mit verschiedenen Ausrichtungen und/oder verschiedenen Ausdehnungen und/oder verschiedenen ausgedehnten Formen, insbesondere und verschiedenen Ausdehnungen, identifizierbar. Insbesondere kann der Begriff "Orientierung" oder "Rotation" für den Begriff "Ausrichtung" synonym verwendet werden. Zusätzlich oder alternativ kann der Begriff "Größe" für den Begriff "Ausdehnung" synonym verwendet werden. Weiter zusätzlich oder alternativ kann oder braucht die Form nicht ein Punkt sein. Weiter zusätzlich oder alternativ kann die Form ein Doppelpunkt bzw. eine Verdoppelung sein (Englisch: each tile replicates the emitters as double dots of different orientation). Weiter zusätzlich oder alternativ kann die Form ein Pluszeichen, ein Minuszeichen, ein Strich und/oder ein Viereck, insbesondere ein Rechteck, insbesondere ein Quadrat, sein. Weiter zusätzlich oder alternativ können die Ausrichtungen, die Ausdehnungen und/oder die Formen verschiedene Werte aufweisen. Im Übrigen wird auf die Fachliteratur verwiesen.

In einer Weiterbildung der Erfindung sind/ist die Emissionsanordnung und/oder die Kacheln jeweils rechteckig, insbesondere quadratisch und/oder geformt. Zusätzlich oder alternativ sind in der Kachelanordnung die Kacheln in einem Diagonalverband und/oder einem Verband verschieden von einem Kreuzverband, insbesondere räumlich, angeordnet. Dies ermöglicht eine gute, insbesondere lückenlose, Anordnung der Kacheln in der Kachelanordnung. Im Übrigen wird auf die Fachliteratur verwiesen.

In einer Weiterbildung der Erfindung sind in der Kachelanordnung die Kacheln jeweils mit den Laseremissionsflächen der Emissionsanordnung abgebildet maximal mit einem Abstand gleich einem maximalen Abstand zwischen zwei Laseremissionsflächen der Emissionsanordnung abgebildet voneinander und/oder minimal mit einem Abstand gleich einem minimalen Abstand zwischen zwei Laseremissionsflächen der Emissionsanordnung abgebildet über- bzw. zueinander, insbesondere nahtlos an- bzw. nebeneinander, insbesondere räumlich, angeordnet. Dies ermöglicht ein gutes, insbesondere lückenloses, Bestimmen der dreidimensionalen Körperform mindestens des Stücks des Körpers. Insbesondere kann der Abstand einen Wert aufweisen. Im Übrigen wird auf die Fachliteratur verwiesen.

In einer Weiterbildung der Erfindung sind, insbesondere in der Vorrichtung, die Emissionsanordnung, insbesondere unabgebildet, und das mindestens eine diffraktive optische Element fest und/oder nicht elektrisch-kontrollierbar-beweglich, insbesondere in mindestens der Orthogonalrichtung orthogonal zu der Emissionsrichtung zu dem Emittieren der Laserstrahlen, zueinander, insbesondere räumlich, angeordnet. Insbesondere ist die Vorrichtung ohne eine elektrisch kontrollierbare Bewegungseinrichtung zum elektrisch kontrollierbaren Bewegen der Emissionsanordnung und des mindestens einen diffraktiven optischen Elements zueinander, insbesondere in mindestens der Orthogonalrichtung. Dies ermöglicht einen einfachen Aufbau der Vorrichtung und/oder, insbesondere somit, dass die Vorrichtung besonders klein und/oder besonders billig bzw. kostengünstig sein kann. Insbesondere kann fest miteinander mechanisch verbunden sein. Im Übrigen wird auf die Fachliteratur verwiesen.

Alternativ können die Emissionsanordnung und das mindestens eine diffraktive optische Element nicht fest und/oder elektrisch-kontrollierbar-beweglich, insbesondere in mindestens der Orthogonalrichtung orthogonal zu der Emissionsrichtung zu dem Emittieren der Laserstrahlen, zueinander angeordnet sein. Insbesondere kann die Vorrichtung mit der elektrisch kontrollierbaren Bewegungseinrichtung zum elektrisch kontrollierbaren Bewegen der Emissionsanordnung und des mindestens einen diffraktiven optischen Elements zueinander, insbesondere in mindestens der Orthogonalrichtung, sein. Dies ermöglicht "temporal active stereo". Insbesondere kann die elektrisch kontrollierbare Bewegungseinrichtung eine piezomechanische Verschiebungseinrichtung sein. Im Übrigen wird auf die Fachliteratur verwiesen.

In einer Weiterbildung der Erfindung weist die Vorrichtung mindestens eine weitere Emissionsanordnung, insbesondere genau drei weitere Emissionsanordnungen, einer weiteren Mehrzahl von weiteren identifizierbaren Laseremissionsflächen auf. Die weiteren Laseremissionsflächen sind zum Emittieren von weiteren Laserstrahlen ausgebildet. Die Emissionsanordnung und die mindestens eine weitere Emissionsanordnung, insbesondere unabgebildet, sind nebeneinander, insbesondere ohne Überlapp, insbesondere in mindestens der Orthogonalrichtung orthogonal zu der Emissionsrichtung zu dem Emittieren der Laserstrahlen und der weiteren Laserstrahlen, insbesondere räumlich, angeordnet. Das mindestens eine diffraktive optische Element ist zum Manipulieren der weiteren emittierten Laserstrahlen zum Erzeugen der Projektionsanordnung ausgebildet derart, dass die Projektionsanordnung mindestens eine weitere Kachelanordnung einer weiteren Mehrzahl von weiteren identifizierbaren Kacheln aufweist. Die weiteren Kacheln bilden jeweils die weitere Emissionsanordnung ab. In der Projektionsanordnung sind die Kachelanordnung und die mindestens eine weitere Kachelanordnung verschoben zueinander überlagert, insbesondere nicht gänzlich abdeckend, insbesondere räumlich, angeordnet. Die Emissionsanordnung und die mindestens eine weitere Emissionsanordnung, insbesondere unabgebildet, sind jeweils elektrisch kontrollierbar zu einem elektrischen Kontrollieren des Emittierens, insbesondere einer Intensität, der Laserstrahlen und der weiteren Laserstrahlen jeweils für eine Zeitsequenz der Laserstrahlen und der weiteren Laserstrahlen, insbesondere ausgebildet. Insbesondere weist die Vorrichtung eine elektrische Kontrolleinrichtung auf. Die Kontrolleinrichtung ist zum elektrischen Kontrollieren der Emissionsanordnung und der mindestens einen weiteren Emissionsanordnung zu dem elektrischen Kontrollieren des Emittierens der Laserstrahlen und der weiteren Laserstrahlen jeweils zu der Zeitsequenz der Laserstrahlen und der weiteren Laserstrahlen ausgebildet. Dies ermöglicht "temporal active stereo". Insbesondere können die Emissionsanordnung und die mindestens eine weitere Emissionsanordnung, die Laseremissionsflächen und die weiteren Laseremissionsflächen, die Laserstrahlen und die weiteren Laserstrahlen, die Kachelanordnung und die mindestens eine weitere Kachelanordnung und/oder die Kacheln und die weiteren Kacheln gleich, insbesondere bau- und/oder deckungsgleich, sein. Zusätzlich oder alternativ kann jeweils einzeln sein. Weiter zusätzlich oder alternativ kann das Kontrollieren automatisch und/oder computerimplementiert sein. Weiter zusätzlich oder alternativ können/kann die Intensität und/oder die Zeitsequenz einen Wert, insbesondere mindestens drei Werte, aufweisen. Weiter zusätzlich oder alternativ können die Emissionsanordnung und die mindestens eine weitere Emissionsanordnung zeitlich nacheinander und/oder zeitlich miteinander bzw. gleichzeitig bzw. gemischt ein- und/oder ausgeschaltet werden für die Zeitsequenz. Weiter zusätzlich oder alternativ kann der Begriffsbestandteil "schalt" oder "steuer" für den Begriffsbestandteil "kontroll" synonym verwendet werden. Weiter zusätzlich oder alternativ kann die Kontrolleinrichtung eine Recheneinrichtung, einen Prozessor, einen Mikrocontroller, eine Speichereinrichtung und/oder einen Computer aufweisen. Im Übrigen wird auf die Fachliteratur verwiesen.

Zusätzlich oder alternativ können die Laseremissionsflächen der Emissionsanordnung, insbesondere unabgebildet, jeweils elektrisch kontrollierbar zu dem elektrischen Kontrollieren des Emittierens, insbesondere der Intensität, der Laserstrahlen jeweils für die Zeitsequenz der Laserstrahlen, insbesondere ausgebildet, sein. Insbesondere kann die Kontrolleinrichtung zum elektrischen Kontrollieren der Laseremissionsflächen zu dem elektrischen Kontrollieren des Emittierens der Laserstrahlen jeweils zu der Zeitsequenz der Laserstrahlen ausgebildet sein. Dies ermöglicht "temporal active stereo". Insbesondere können die Laseremissionsflächen zeitlich nacheinander und/oder zeitlich miteinander bzw. gleichzeitig bzw. gemischt ein- und/oder ausgeschaltet werden für die Zeitsequenz. Im Übrigen wird auf die Fachliteratur verwiesen.

In einer Weiterbildung, insbesondere einer Ausgestaltung, der Erfindung weist die Vorrichtung einen Chip auf. Der Chip weist die Emissionsanordnung, insbesondere unabgebildet, auf. Insbesondere weist die Vorrichtung mindestens einen weiteren Chip auf. Der mindestens eine weitere Chip weist die mindestens eine weitere Emissionsanordnung, insbesondere unabgebildet, auf. Dies ermöglicht ein einfaches Kontrollieren des Emittierens für die Zeitsequenz. Insbesondere kann der Chip elektrisch kontrollierbar zu dem Kontrollieren des Emittierens für die Zeitsequenz, insbesondere ausgebildet, sein. Im Übrigen wird auf die Fachliteratur verwiesen.

In einer Weiterbildung der Erfindung ist die Mehrzahl der Laseremissionsflächen minimal 50, insbesondere minimal 100, insbesondere minimal 200, und/oder maximal 2000, insbesondere maximal 1000, insbesondere maximal 500. Zusätzlich oder alternativ ist die Mehrzahl der Kacheln minimal 50, insbesondere minimal 100, insbesondere minimal 200, und/oder maximal 8000, insbesondere maximal 4000, insbesondere maximal 2000. Weiter zusätzlich oder alternativ ist der Abstand zwischen der Emissionsanordnung, insbesondere unabgebildet, und dem mindestens einen diffraktiven optischen Element, insbesondere in der Emissionsrichtung zu dem Emittieren der Laserstrahlen, minimal 2 mm (Millimeter), insbesondere minimal 4 mm, und/oder maximal 40 mm, insbesondere maximal 20 mm. Weiter zusätzlich oder alternativ ist eine Abmessung der Emissionsanordnung, insbesondere unabgebildet, insbesondere in mindestens der Orthogonalrichtung orthogonal zu der Emissionsrichtung zu dem Emittieren der Laserstrahlen, minimal 100 µm (Mikrometer), insbesondere minimal 200 µm, insbesondere minimal 400 µm, und/oder maximal 4000 µm, insbesondere maximal 2000 µm, insbesondere maximal 1000 µm. Weiter zusätzlich oder alternativ ist eine Abmessung des mindestens einen diffraktiven optischen Elements, insbesondere in mindestens der Orthogonalrichtung orthogonal zu der Emissionsrichtung zu dem Emittieren der Laserstrahlen, minimal 1 mm, insbesondere minimal 2 mm, insbesondere minimal 5 mm, und/oder maximal 50 mm, insbesondere maximal 30 mm, insbesondere maximal 15 mm. Dies ermöglicht, insbesondere die Mehrzahlen ermöglichen, ein gutes Bestimmen der dreidimensionalen Körperform mindestens des Stücks des Körpers. Zusätzlich oder alternativ ermöglicht dies, insbesondere der Abstand, dass die Vorrichtung klein sein kann. Weiter zusätzlich oder alternativ ermöglicht dies, insbesondere ermöglichen die Abmessungen, das Manipulieren zum Erzeugen der Projektionsanordnung.

Das erfindungsgemäße System ist zum Bestimmen der dreidimensionalen Körperform mindestens des Stücks des Körpers, insbesondere ausgebildet. Das System weist die Vorrichtung wie vorhergehend genannt zum Projizieren der Projektionsanordnung auf mindestens das Stück des Körpers auf. Des Weiteren weist das System mindestens eine Kamera, insbesondere genau zwei Kameras, auf. Die mindestens eine Kamera ist zum Aufnehmen mindestens eines Bilds der projizierten Projektionsanordnung, insbesondere vollständig, auf mindestens dem Stück des Körpers ausgebildet. Außerdem weist das System eine Identifizierungs- und Bestimmungseinrichtung auf. Die Identifizierungs- und Bestimmungseinrichtung ist zum Bestimmen der dreidimensionalen Körperform mindestens des Stücks des Körpers mittels Identifizierens von Laseremissionsflächen der Mehrzahl der identifizierbaren Laseremissionsflächen der Emissionsanordnung abgebildet jeweils von Kacheln der Mehrzahl der identifizierbaren Kacheln der Kachelanordnung in dem mindestens einen aufgenommenen Bild der projizierten Projektionsanordnung ausgebildet. Insbesondere können/kann das System, die Kamera und/oder die Identifizierungs- und Bestimmungseinrichtung elektrisch und/oder optisch sein. Zusätzlich oder alternativ können/kann das Bestimmen, das Aufnehmen und/oder das Identifizieren automatisch, optisch und/oder computerimplementiert sein. Weiter zusätzlich oder alternativ kann die Kamera eine Digitalkamera sein. Weiter zusätzlich oder alternativ kann das Bild ein Digitalbild sein. Weiter zusätzlich oder alternativ kann das Bild alle Kacheln mindestens teilweise aufweisen. Weiter zusätzlich oder alternativ können/kann die Körperform und/oder das Bild Werte aufweisen. Weiter zusätzlich oder alternativ kann die Identifizierungs- und Bestimmungseinrichtung eine Recheneinrichtung, einen Prozessor, einen Mikrocontroller, eine Speichereinrichtung und/oder einen Computer aufweisen. Weiter zusätzlich oder alternativ kann das Bestimmen mit Ortskorrelation und/oder ohne Zeitkorrelation sein. Weiter zusätzlich oder alternativ kann das Bestimmen mittels Ermittelns von, insbesondere dreidimensionalen, Positionskoordinaten, insbesondere Werten der Positionskoordinaten, für die identifizierten Laseremissionsflächen auf mindestens dem Stück des Körpers sein. Insbesondere kann die dreidimensionale Körperform mindestens des Stücks des Körpers durch die ermittelten Positionskoordinaten definiert bzw. gebildet sein. Weiter zusätzlich oder alternativ kann das Bestimmen basierend auf den ermittelten Positionskoordinaten sein. Im Übrigen wird auf die Fachliteratur verwiesen.

Das erfindungsgemäße Verfahren ist zum Betreiben bzw. eine erfindungsgemäße Verwendung der Vorrichtung wie vorhergehend genannt ist zum Projizieren der Projektionsanordnung auf mindestens das Stück des Körpers und/oder des Systems wie vorhergehend genannt ist zum Bestimmen der dreidimensionalen Körperform mindestens des Stücks des Körpers. Insbesondere können/kann das Verfahren und/oder das Betreiben automatisch, optisch und/oder computerimplementiert sein.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgenden anhand der Figuren erläutert sind. Dabei zeigen:

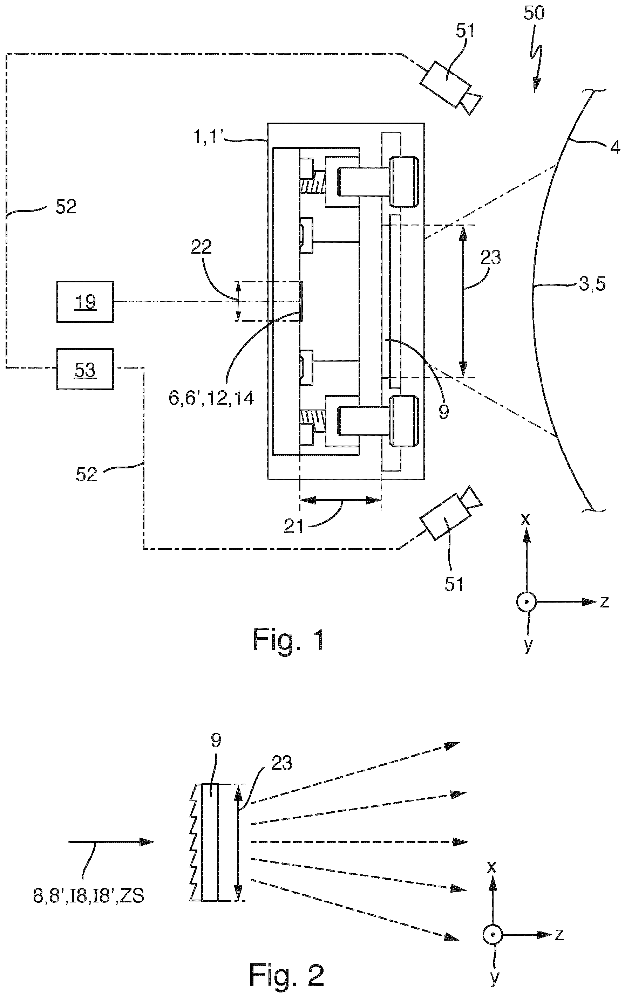

- Fig. 1: eine schematische Ansicht eines erfindungsgemäßen Systems zum Bestimmen einer dreidimensionalen Körperform mindestens eines Stücks eines Körpers aufweisend eine erfindungsgemäße Vorrichtung zum Projizieren einer Projektionsanordnung auf mindestens das Stück des Körpers für das Bestimmen der dreidimensionalen Körperform mindestens des Stücks des Körpers und ein erfindungsgemäßes Verfahren zum Betreiben der Vorrichtung zum Projizieren der Projektionsanordnung auf mindestens das Stück des Körpers und/oder des Systems zum Bestimmen der dreidimensionalen Körperform mindestens des Stücks des Körpers,
- Fig. 2: eine schematische Ansicht eines Teils der Vorrichtung,
- Fig. 3: eine schematische Ansicht der Projektionsanordnung aufweisend eine Kachelanordnung einer Mehrzahl von identifizierbaren Kacheln mit Kachelgrenzen und einer Emissionsanordnung der Vorrichtung unabgebildet,
- Fig. 4: eine schematische Ansicht einer Kachel der Mehrzahl der Kacheln und die Emissionsanordnung unabgebildet mit Kachelgrenzen,
- Fig. 5: eine schematische Ansicht der Kachel der Mehrzahl der Kacheln abbildend die Emissionsanordnung mit Kachelgrenzen,
- Fig. 6: eine schematische Ansicht der Projektionsanordnung aufweisend die Kachelanordnung der Mehrzahl der identifizierbaren Kacheln jeweils abbildend die Emissionsanordnung mit Kachelgrenzen,
- Fig. 7: eine schematische Ansicht der Projektionsanordnung aufweisend die Kachelanordnung der Mehrzahl der identifizierbaren Kacheln jeweils abbildend die Emissionsanordnung ohne Kachelgrenzen,
- Fig. 8: eine schematische Ansicht der Emissionsanordnung und mindestens einer weiteren Emissionsanordnung der Vorrichtung unabgebildet,
- Fig. 9: eine schematische Ansicht der Projektionsanordnung mit der Emissionsanordnung zentral angeordnet abgebildet,
- Fig. 10: eine schematische Ansicht der Projektionsanordnung mit der Emissionsanordnung und der mindestens einen weiteren Emissionsanordnung dezentral angeordnet abgebildet, und
- Fig. 11 bis 14: schematische Ansichten der Projektionsanordnung mit der Emissionsanordnung und der mindestens einen weiteren Emissionsanordnung dezentral angeordnet jeweils abgebildet.

### DETAILLIERTE BESCHREIBUNG DER AUSFÜHRUNGSBEISPIELE

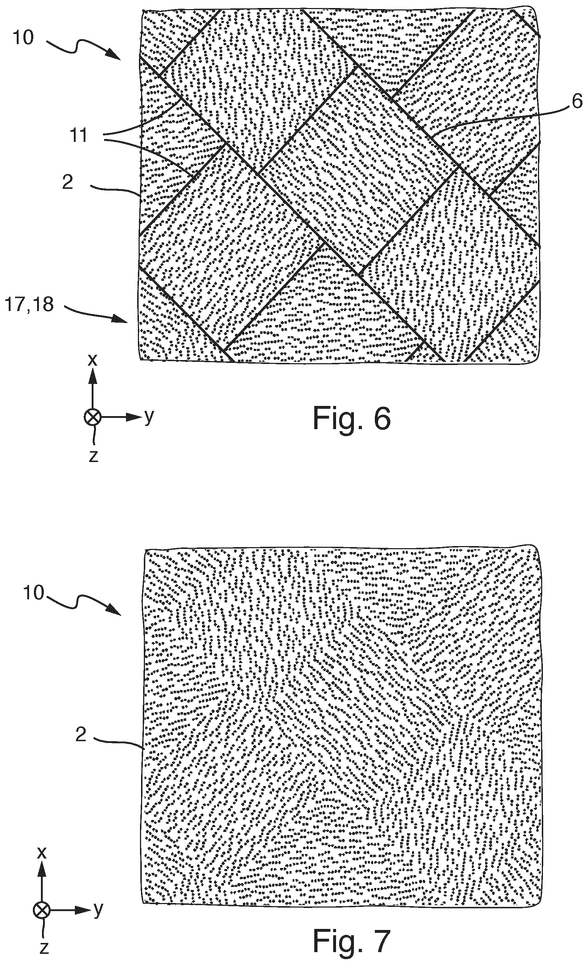

Fig. 1 bis 14 zeigen eine erfindungsgemäße Vorrichtung 1, insbesondere einen erfindungsgemäßen Projektor 1', zum Projizieren einer Projektionsanordnung 2 auf mindestens ein Stück 3 eines Körpers 4 für ein Bestimmen einer dreidimensionalen Körperform 5 mindestens des Stücks 3 des Körpers 4, ein erfindungsgemäßes System 50 zum Bestimmen der dreidimensionalen Körperform 5 mindestens des Stücks 3 des Körpers 4 aufweisend die Vorrichtung 1 zum Projizieren der Projektionsanordnung 2 auf mindestens das Stück 3 des Körpers 4 und ein erfindungsgemäßes Verfahren zum Betreiben der Vorrichtung 1 zum Projizieren der Projektionsanordnung 2 auf mindestens das Stück 3 des Körpers 4 und/oder des Systems 50 zum Bestimmen der dreidimensionalen Körperform 5 mindestens des Stücks 3 des Körpers 4. Insbesondere projiziert die Vorrichtung 1 und/oder das System 50 bestimmt.

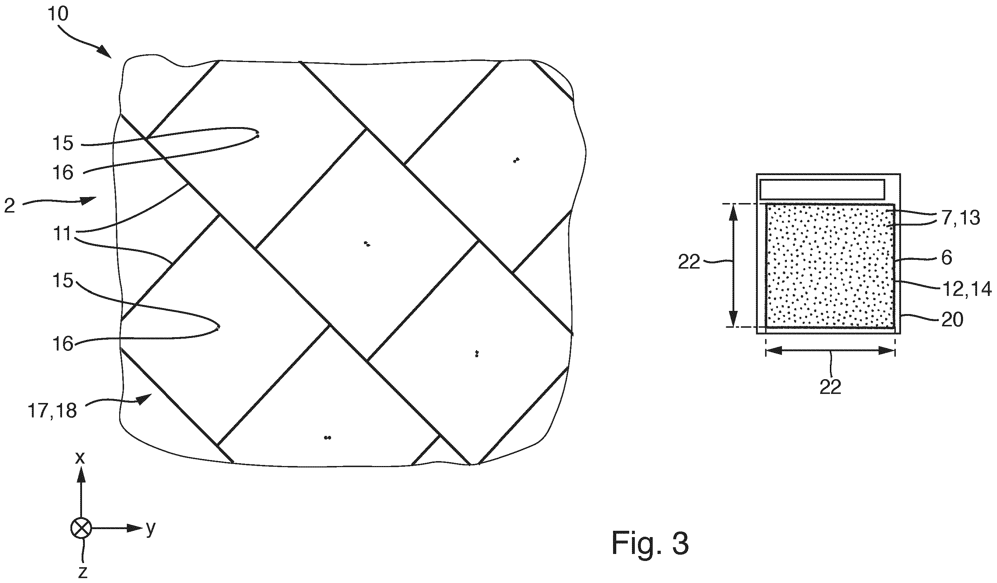

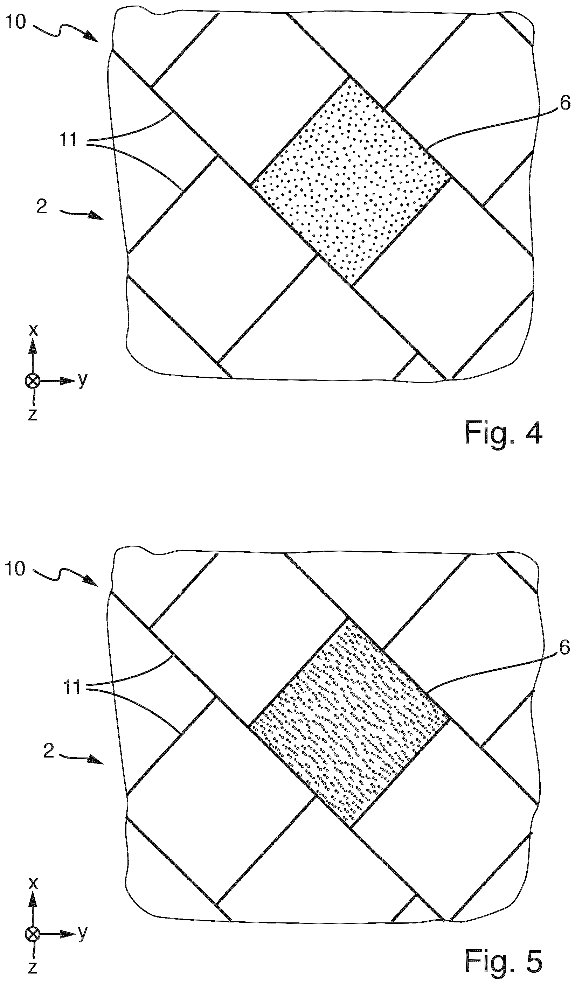

Die Vorrichtung 1 weist eine Emissionsanordnung 6 einer Mehrzahl von identifizierbaren Laseremissionsflächen 7 auf, wie in Fig. 1 und 3 bis 14 gezeigt. Die Laseremissionsflächen 7 sind zum Emittieren von Laserstrahlen 8 ausgebildet, insbesondere emittieren, wie in Fig. 2 gezeigt. Des Weiteren weist die Vorrichtung 1 mindestens, insbesondere genau, ein diffraktives optisches Element 9 auf, wie in Fig. 1 und 2 gezeigt. Das mindestens eine diffraktive optische Element 9 ist zum Manipulieren der emittierten Laserstrahlen 8 zum Erzeugen der Projektionsanordnung 2 ausgebildet, insbesondere manipuliert, derart, dass die Projektionsanordnung 2 eine Kachelanordnung 10 einer Mehrzahl von identifizierbaren Kacheln 11 aufweist, wie in Fig. 3 bis 7 und 9 bis 14 gezeigt. Die Kacheln 11 bilden jeweils die Emissionsanordnung 6 ab, wie in Fig. 5 bis 7 und 9 bis 14 gezeigt.

Außerdem weist das System 50 mindestens eine Kamera 51, insbesondere genau zwei Kameras 51, auf, wie in Fig. 1 gezeigt. Die mindestens eine Kamera 51 ist zum Aufnehmen mindestens eines Bilds 52 der projizierten Projektionsanordnung 2 auf mindestens dem Stück 3 des Körpers 4 ausgebildet, insbesondere nimmt auf. Weiter weist das System 50 eine Identifizierungs- und Bestimmungseinrichtung 53 auf. Die Identifizierungs- und Bestimmungseinrichtung 53 ist zum Bestimmen der dreidimensionalen Körperform 5 mindestens des Stücks 3 des Körpers 4 mittels Identifizierens von Laseremissionsflächen 7 der Mehrzahl der identifizierbaren Laseremissionsflächen 7 der Emissionsanordnung 6 abgebildet jeweils von Kacheln 11 der Mehrzahl der identifizierbaren Kacheln 11 der Kachelanordnung 10 in dem mindestens einen aufgenommenen Bild 52 der projizierten Projektionsanordnung 2 ausgebildet, insbesondere identifiziert und bestimmt.

In dem gezeigten Ausführungsbeispiel ist der Körper 4 eine Kugel. Daher wird in dem gezeigten Ausführungsbeispiel die dreidimensionale Körperform 5 genau des Stücks 3, insbesondere des Kugeloberflächenstücks, des Körpers 4 bestimmt. In alternativen Ausführungsbeispielen kann der Körper verschieden sein und/oder die dreidimensionale Körperform des vollständigen Körpers kann bestimmt werden.

Im Detail sind die Laseremissionsflächen 7 Laseremissionsflächen von Oberflächenemittern 12 der Vorrichtung 1, wie in Fig. 1, 3 und 8 gezeigt.

Zudem sind die Laseremissionsflächen 7 Punktlaseremissionsflächen 13, insbesondere von Punktlaserquellen 14 der Vorrichtung 1.

Des Weiteren sind in der Emissionsanordnung 6, insbesondere und in den Kacheln 11 jeweils abgebildet, die Laseremissionsflächen 7 jeweils durch Laseremissionsflächen 7 in ihrer Umgebung, insbesondere durch eine einmalige Anordnung der Laseremissionsflächen 7 in der Emissionsanordnung 6, insbesondere und in den Kacheln 11 jeweils abgebildet, identifizierbar, wie in Fig. 3 bis 14 gezeigt.

Außerdem sind in der Kachelanordnung 10 die Kacheln 11 jeweils durch die Laseremissionsflächen 7 der Emissionsanordnung 6 abgebildet mit mindestens, insbesondere genau, einer ausgedehnten Form 15 mit verschiedenen Ausrichtungen 16 und/oder verschiedenen Ausdehnungen und/oder verschiedenen ausgedehnten Formen, insbesondere und verschiedenen Ausdehnungen, identifizierbar, wie in Fig. 3, 5 bis 7 und 9 bis 14 gezeigt.

In dem gezeigten Ausführungsbeispiel ist die Form ein Doppelpunkt.

Weiter sind/ist die Emissionsanordnung 6 und/oder die Kacheln 11 jeweils rechteckig, insbesondere quadratisch, wie in Fig. 3 bis 14 gezeigt. Zusätzlich oder alternativ sind in der Kachelanordnung 10 die Kacheln 11 in einem Diagonalverband 17 und/oder einem Verband 18 verschieden von einem Kreuzverband angeordnet, wie in Fig. 3 bis 7 und 9 bis 14 gezeigt.

Zudem sind in der Kachelanordnung 10 die Kacheln 11 jeweils mit den Laseremissionsflächen 7 der Emissionsanordnung 6 abgebildet maximal mit einem Abstand gleich einem maximalen Abstand zwischen zwei Laseremissionsflächen der Emissionsanordnung abgebildet voneinander und/oder minimal mit einem Abstand gleich einem minimalen Abstand zwischen zwei Laseremissionsflächen der Emissionsanordnung abgebildet übereinander, insbesondere nahtlos aneinander, angeordnet.

Des Weiteren sind die Emissionsanordnung 6 und das mindestens eine diffraktive optische Element 9 fest und/oder nicht elektrisch-kontrollierbar-beweglich, insbesondere in mindestens der Orthogonalrichtung x, y orthogonal zu einer Emissionsrichtung z zu dem Emittieren der Laserstrahlen 8, zueinander, angeordnet, wie in Fig. 1 gezeigt. Insbesondere ist die Vorrichtung 1 ohne eine elektrisch kontrollierbare Bewegungseinrichtung zum elektrisch kontrollierbaren Bewegen der Emissionsanordnung 6 und des mindestens einen diffraktiven optischen Elements 9 zueinander, insbesondere in mindestens der Orthogonalrichtung x, y.

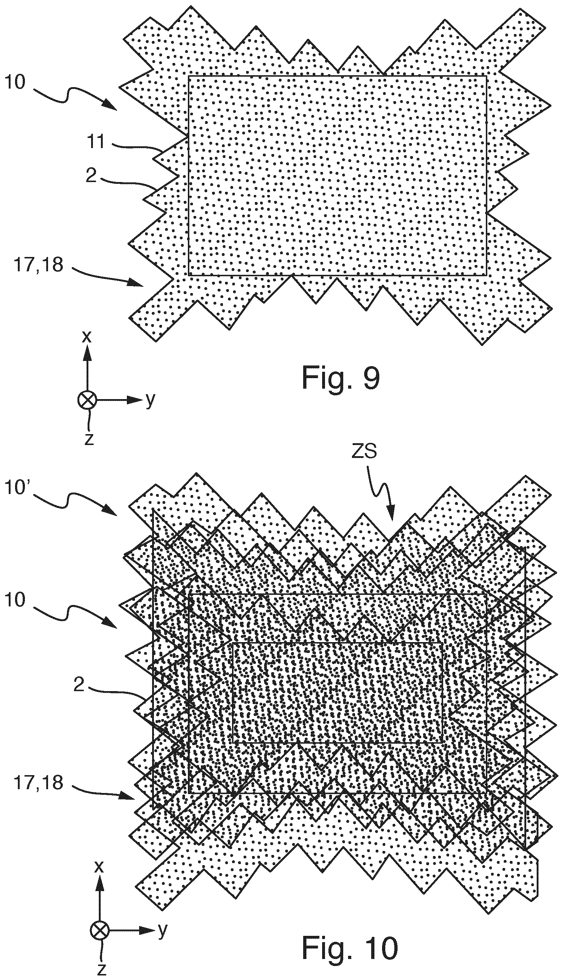

Außerdem weist die Vorrichtung mindestens eine weitere Emissionsanordnung 6', insbesondere genau drei weitere Emissionsanordnungen 6', einer weiteren Mehrzahl von weiteren identifizierbaren Laseremissionsflächen 7' auf, wie in Fig. 1 und 8 bis 14 gezeigt. Die weiteren Laseremissionsflächen 7' sind zum Emittieren von weiteren Laserstrahlen 8' ausgebildet, insbesondere emittieren, wie in Fig. 2 gezeigt. Die Emissionsanordnung 6 und die mindestens eine weitere Emissionsanordnung 6' sind nebeneinander, insbesondere in mindestens der Orthogonalrichtung x, y orthogonal zu der Emissionsrichtung z zu dem Emittieren der Laserstrahlen 8 und der weiteren Laserstrahlen 8', angeordnet. Das mindestens eine diffraktive optische Element 9 ist zum Manipulieren der weiteren emittierten Laserstrahlen 8' zum Erzeugen der Projektionsanordnung 2 ausgebildet, insbesondere manipuliert, derart, dass die Projektionsanordnung 2 mindestens eine weitere Kachelanordnung 10' einer weiteren Mehrzahl von weiteren identifizierbaren Kacheln 11' aufweist, wie in Fig. 10 bis 14 gezeigt. Die weiteren Kacheln 11' bilden jeweils die weitere Emissionsanordnung 6' ab. In der Projektionsanordnung 2 sind die Kachelanordnung 10 und die mindestens eine weitere Kachelanordnung 10' verschoben zueinander überlagert angeordnet. Die Emissionsanordnung 6 und die mindestens eine weitere Emissionsanordnung 6' sind jeweils elektrisch kontrollierbar zu einem elektrischen Kontrollieren des Emittierens, insbesondere einer Intensität I8, I8', der Laserstrahlen 8 und der weiteren Laserstrahlen 8' jeweils für eine Zeitsequenz ZS der Laserstrahlen 8 und der weiteren Laserstrahlen 8', wie in Fig. 2 und 10 gezeigt. Insbesondere weist die Vorrichtung 1 eine elektrische Kontrolleinrichtung 19 auf, wie in Fig. 1 gezeigt. Die Kontrolleinrichtung 19 ist zum elektrischen Kontrollieren der Emissionsanordnung 6 und der mindestens einen weiteren Emissionsanordnung 6' zu dem elektrischen Kontrollieren des Emittierens der Laserstrahlen 8 und der weiteren Laserstrahlen 8' jeweils zu der Zeitsequenz ZS der Laserstrahlen 8 und der weiteren Laserstrahlen 8' ausgebildet, insbesondere kontrolliert.

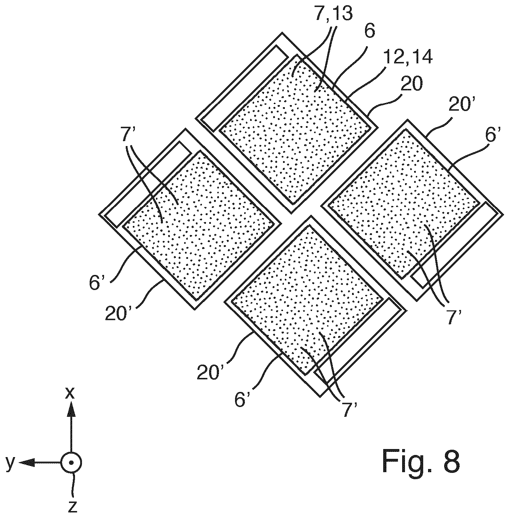

Weiter weist die Vorrichtung 1 einen Chip 20 auf, wie in Fig. 3 und 8 gezeigt. Der Chip 20 weist die Emissionsanordnung 6 auf. Insbesondere weist die Vorrichtung 1 mindestens einen weiteren Chip 20' auf. Der mindestens eine weitere Chip 20' weist die mindestens eine weitere Emissionsanordnung 6' auf.

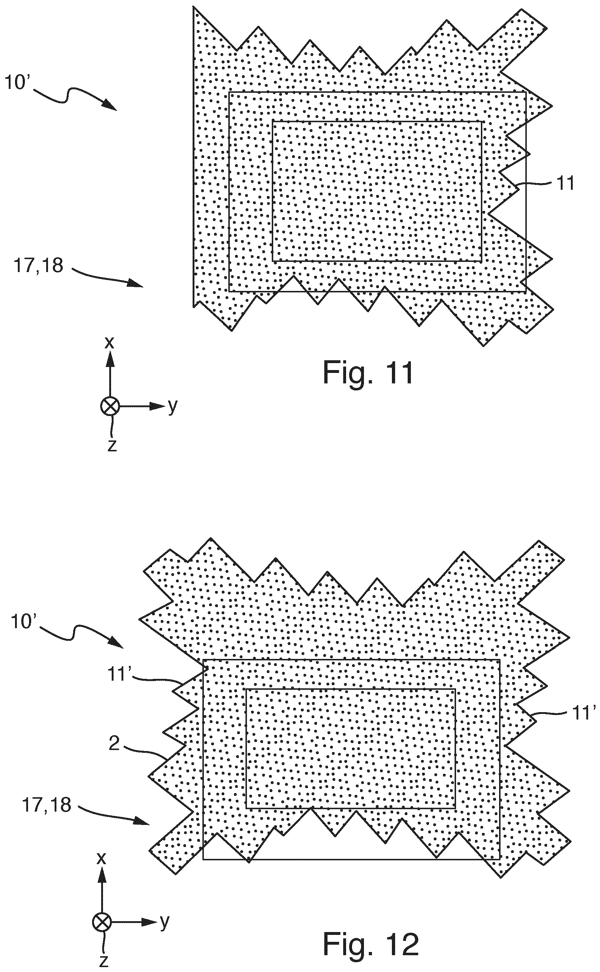

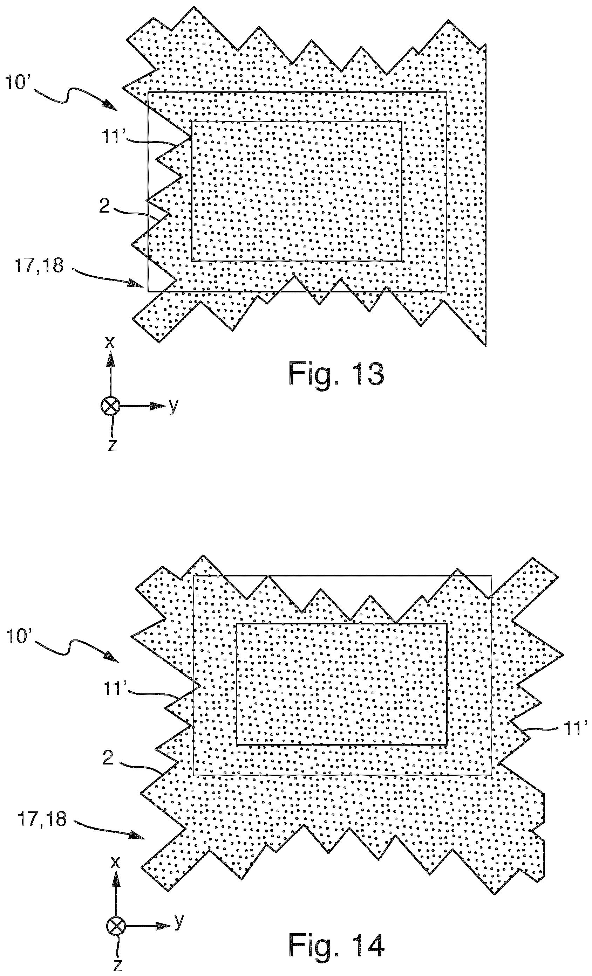

In Fig. 9 ist die Projektionsanordnung mit dem VCSEL-Chip zentral hinter dem diffraktiven optischen Element angeordnet. Das Rechteck ist ein nutzbarer rechteckiger Bildbereich. In Fig. 10 sind die vier VCSEL-Chips dezentral angeordnet. In Fig. 11 ist die Projektionsanordnung mit dem ersten VCSEL-Chip dezentral angeordnet. Das große Rechteck ist ein nutzbarer rechteckiger Bildbereich mit dem VCSEL-Chip zentral angeordnet. Das kleine Rechteck ist ein nutzbarer rechteckiger Bildbereich mit den vier bzw. allen VCSEL-Chips dezentral angeordnet. In Fig. 12 ist die Projektionsanordnung mit dem zweiten VCSEL-Chip dezentral angeordnet. In Fig. 13 ist die Projektionsanordnung mit dem dritten VCSEL-Chip dezentral angeordnet. In Fig. 14 ist die Projektionsanordnung mit dem vierten VCSEL-Chip dezentral angeordnet.

Zudem ist die Mehrzahl der Laseremissionsflächen 7 minimal 50, insbesondere minimal 100, insbesondere minimal 200, und/oder maximal 2000, insbesondere maximal 1000, insbesondere maximal 500, wie in Fig. 3 bis 14 gezeigt. Zusätzlich oder alternativ ist die Mehrzahl der Kacheln 11 minimal 50, insbesondere minimal 100, insbesondere minimal 200, und/oder maximal 8000, insbesondere maximal 4000, insbesondere maximal 2000. Weiter zusätzlich oder alternativ ist ein Abstand 21 zwischen der Emissionsanordnung 6 und dem mindestens einen diffraktiven optischen Element 9, insbesondere in der Emissionsrichtung z zu dem Emittieren der Laserstrahlen 8, minimal 2 mm, insbesondere minimal 4 mm, und/oder maximal 40 mm, insbesondere maximal 20 mm, wie in Fig. 1 gezeigt. Weiter zusätzlich oder alternativ ist eine Abmessung 22 der Emissionsanordnung 6, insbesondere in mindestens der Orthogonalrichtung x, y orthogonal zu der Emissionsrichtung z zu dem Emittieren der Laserstrahlen 8, minimal 100 µm, insbesondere minimal 200 µm, insbesondere minimal 400 µm, und/oder maximal 4000 µm, insbesondere maximal 2000 µm, insbesondere maximal 1000 µm, wie in Fig. 1 und 3 gezeigt. Weiter zusätzlich oder alternativ ist eine Abmessung 23 des mindestens einen diffraktiven optischen Elements 9, insbesondere in mindestens der Orthogonalrichtung x, y orthogonal zu der Emissionsrichtung z zu dem Emittieren der Laserstrahlen 8, minimal 1 mm, insbesondere minimal 2 mm, insbesondere minimal 5 mm, und/oder maximal 50 mm, insbesondere maximal 30 mm, insbesondere maximal 15 mm, wie in Fig. 1 und 2 gezeigt.

Wie die gezeigten und oben erläuterten Ausführungsbeispiele deutlich machen, stellt die Erfindung eine vorteilhafte Vorrichtung zum Projizieren einer Projektionsanordnung auf mindestens ein Stück eines Körpers für ein Bestimmen einer dreidimensionalen Körperform mindestens des Stücks des Körpers, ein vorteilhaftes System zum Bestimmen einer dreidimensionalen Körperform mindestens eines Stücks eines Körpers aufweisend die Vorrichtung und ein vorteilhaftes Verfahren zum Betreiben der Vorrichtung und/oder des Systems bereit, die verbesserte Eigenschaften aufweisen.

## Patentansprüche

1. Vorrichtung (1), insbesondere Projektor (1'), zum Projizieren einer Projektionsanordnung (2) auf mindestens ein Stück (3) eines Körpers (4) für ein Bestimmen einer dreidimensionalen Körperform (5) mindestens des Stücks (3) des Körpers (4), wobei die Vorrichtung (1) aufweist:
- eine Emissionsanordnung (6) einer Mehrzahl von identifizierbaren Laseremissionsflächen (7), welche zum Emittieren von Laserstrahlen (8) ausgebildet sind, und
- mindestens, insbesondere genau, ein diffraktives optisches Element (9), wobei das mindestens eine diffraktive optische Element (9) zum Manipulieren der emittierten Laserstrahlen (8) zum Erzeugen der Projektionsanordnung (2) ausgebildet ist derart,
- dass die Projektionsanordnung (2) eine Kachelanordnung (10) einer Mehrzahl von identifizierbaren Kacheln (11) aufweist, welche jeweils die Emissionsanordnung (6) abbilden.

2. Vorrichtung (1) nach dem vorhergehenden Anspruch,
- wobei die Laseremissionsflächen (7) Laseremissionsflächen von Oberflächenemittern (12) der Vorrichtung (1) sind.

3. Vorrichtung (1) nach einem der vorhergehenden Ansprüche,
- wobei die Laseremissionsflächen (7) Punktlaseremissionsflächen (13), insbesondere von Punktlaserquellen (14) der Vorrichtung (1), sind.

4. Vorrichtung (1) nach einem der vorhergehenden Ansprüche,
- wobei in der Emissionsanordnung (6), insbesondere und in den Kacheln (11) jeweils abgebildet, die Laseremissionsflächen (7) jeweils durch Laseremissionsflächen (7) in ihrer Umgebung, insbesondere durch eine einmalige Anordnung der Laseremissionsflächen (7) in der Emissionsanordnung (6), insbesondere und in den Kacheln (11) jeweils abgebildet, identifizierbar sind.

5. Vorrichtung (1) nach einem der vorhergehenden Ansprüche,
- wobei in der Kachelanordnung (10) die Kacheln (11) jeweils durch die Laseremissionsflächen (7) der Emissionsanordnung (6) abgebildet mit mindestens, insbesondere genau, einer ausgedehnten Form (15) mit verschiedenen Ausrichtungen (16) und/oder verschiedenen Ausdehnungen und/oder verschiedenen ausgedehnten Formen, insbesondere und verschiedenen Ausdehnungen, identifizierbar sind.

6. Vorrichtung (1) nach einem der vorhergehenden Ansprüche,
- wobei die Emissionsanordnung (6) und/oder die Kacheln (11) jeweils rechteckig, insbesondere quadratisch, sind/ist, und/oder
- wobei in der Kachelanordnung (10) die Kacheln (11) in einem Diagonalverband (17) und/oder einem Verband (18) verschieden von einem Kreuzverband angeordnet sind.

7. Vorrichtung (1) nach einem der vorhergehenden Ansprüche,
- wobei in der Kachelanordnung (10) die Kacheln (11) jeweils mit den Laseremissionsflächen (7) der Emissionsanordnung (6) abgebildet maximal mit einem Abstand gleich einem maximalen Abstand zwischen zwei Laseremissionsflächen der Emissionsanordnung abgebildet voneinander und/oder minimal mit einem Abstand gleich einem minimalen Abstand zwischen zwei Laseremissionsflächen der Emissionsanordnung abgebildet übereinander, insbesondere nahtlos aneinander, angeordnet sind.

8. Vorrichtung (1) nach einem der vorhergehenden Ansprüche,
- wobei die Emissionsanordnung (6) und das mindestens eine diffraktive optische Element (9) fest und/oder nicht elektrisch-kontrollierbar-beweglich, insbesondere in mindestens einer Orthogonalrichtung (x, y) orthogonal zu einer Emissionsrichtung (z) zu dem Emittieren der Laserstrahlen (8), zueinander angeordnet sind,
- insbesondere wobei die Vorrichtung (1) ohne eine elektrisch kontrollierbare Bewegungseinrichtung zum elektrisch kontrollierbaren Bewegen der Emissionsanordnung (6) und des mindestens einen diffraktiven optischen Elements (9) zueinander, insbesondere in mindestens der Orthogonalrichtung (x, y), ist.

9. Vorrichtung (1) nach einem der vorhergehenden Ansprüche,
- wobei die Vorrichtung (1) mindestens eine weitere Emissionsanordnung (6'), insbesondere genau drei weitere Emissionsanordnungen (6'), einer weiteren Mehrzahl von weiteren identifizierbaren Laseremissionsflächen (7'), welche zum Emittieren von weiteren Laserstrahlen (8') ausgebildet sind, aufweist,
- wobei die Emissionsanordnung (6) und die mindestens eine weitere Emissionsanordnung (6') nebeneinander, insbesondere mindestens einer Orthogonalrichtung (x, y) orthogonal zu einer Emissionsrichtung (z) zu dem Emittieren der Laserstrahlen (8) und der weiteren Laserstrahlen (8'), angeordnet sind und wobei das mindestens eine diffraktive optische Element (9) zum Manipulieren der weiteren emittierten Laserstrahlen (8') zum Erzeugen der Projektionsanordnung (2) ausgebildet ist derart,
- dass die Projektionsanordnung (2) mindestens eine weitere Kachelanordnung (10') einer weiteren Mehrzahl von weiteren identifizierbaren Kacheln (11') aufweist, welche jeweils die weitere Emissionsanordnung (6') abbilden, wobei in der Projektionsanordnung (2) die Kachelanordnung (10) und die mindestens eine weitere Kachelanordnung (10') verschoben zueinander überlagert angeordnet sind, und
- wobei die Emissionsanordnung (6) und die mindestens eine weitere Emissionsanordnung (6') jeweils elektrisch kontrollierbar zu einem elektrischen Kontrollieren des Emittierens, insbesondere einer Intensität (I8, I8'), der Laserstrahlen (8) und der weiteren Laserstrahlen (8') jeweils für eine Zeitsequenz (ZS) der Laserstrahlen (8) und der weiteren Laserstrahlen (8') sind,
- insbesondere wobei die Vorrichtung (1) eine elektrische Kontrolleinrichtung (19) aufweist, welche zum elektrischen Kontrollieren der Emissionsanordnung (6) und der mindestens einen weiteren Emissionsanordnung (6') zu dem elektrischen Kontrollieren des Emittierens der Laserstrahlen (8) und der weiteren Laserstrahlen (8') jeweils zu der Zeitsequenz (ZS) der Laserstrahlen (8) und der weiteren Laserstrahlen (8') ausgebildet ist.

10. Vorrichtung (1) nach einem der vorhergehenden Ansprüche, insbesondere dem vorhergehenden Anspruch,
- wobei die Vorrichtung (1) einen Chip (20) aufweist, welcher die Emissionsanordnung (6) aufweist,
- insbesondere wobei die Vorrichtung (1) mindestens einen weiteren Chip (20') aufweist, welcher die mindestens eine weitere Emissionsanordnung (6') aufweist.

11. Vorrichtung (1) nach einem der vorhergehenden Ansprüche,
- wobei die Mehrzahl der Laseremissionsflächen (7) minimal 50, insbesondere minimal 100, insbesondere minimal 200, und/oder maximal 2000, insbesondere maximal 1000, insbesondere maximal 500, ist, und/oder
- wobei die Mehrzahl der Kacheln (11) minimal 50, insbesondere minimal 100, insbesondere minimal 200, und/oder maximal 8000, insbesondere maximal 4000, insbesondere maximal 2000, ist, und/oder
- wobei ein Abstand (21) zwischen der Emissionsanordnung (6) und dem mindestens einen diffraktiven optischen Element (9), insbesondere in einer Emissionsrichtung (z) zu dem Emittieren der Laserstrahlen (8), minimal 2 mm, insbesondere minimal 4 mm, und/oder maximal 40 mm, insbesondere maximal 20 mm, ist, und/oder
- wobei eine Abmessung (22) der Emissionsanordnung (6), insbesondere in mindestens einer Orthogonalrichtung (x, y) orthogonal zu einer Emissionsrichtung (z) zu dem Emittieren der Laserstrahlen (8), minimal 100 µm, insbesondere minimal 200 µm, insbesondere minimal 400 µm, und/oder maximal 4000 µm, insbesondere maximal 2000 µm, insbesondere maximal 1000 µm, ist, und/oder
- wobei eine Abmessung (23) des mindestens einen diffraktiven optischen Elements (9), insbesondere in mindestens einer Orthogonalrichtung (x, y) orthogonal zu einer Emissionsrichtung (z) zu dem Emittieren der Laserstrahlen (8), minimal 1 mm, insbesondere minimal 2 mm, insbesondere minimal 5 mm, und/oder maximal 50 mm, insbesondere maximal 30 mm, insbesondere maximal 15 mm, ist.

12. System (50) zum Bestimmen einer dreidimensionalen Körperform (5) mindestens eines Stücks (3) eines Körpers (4), wobei das System (50) aufweist:
- die Vorrichtung (1) nach einem der vorhergehenden Ansprüche zum Projizieren der Projektionsanordnung (2) auf mindestens das Stück (3) des Körpers (4),
- mindestens eine Kamera (51), insbesondere genau zwei Kameras (51), wobei die mindestens eine Kamera (51) zum Aufnehmen mindestens eines Bilds (52) der projizierten Projektionsanordnung (2) auf mindestens dem Stück (3) des Körpers (4) ausgebildet ist, und
- eine Identifizierungs- und Bestimmungseinrichtung (53), welche zum Bestimmen der dreidimensionalen Körperform (5) mindestens des Stücks (3) des Körpers (4) mittels Identifizierens von Laseremissionsflächen (7) der Mehrzahl der identifizierbaren Laseremissionsflächen (7) der Emissionsanordnung (6) abgebildet jeweils von Kacheln (11) der Mehrzahl der identifizierbaren Kacheln (11) der Kachelanordnung (10) in dem mindestens einen aufgenommenen Bild (52) der projizierten Projektionsanordnung (2) ausgebildet ist.

13. Verfahren zum Betreiben der Vorrichtung (1) nach einem der vorhergehenden Ansprüche zum Projizieren der Projektionsanordnung (2) auf mindestens das Stück (3) des Körpers (4) und/oder des Systems (50) nach dem vorhergehenden Anspruch zum Bestimmen der dreidimensionalen Körperform (5) mindestens des Stücks (3) des Körpers (4).
